# EUROPEAN PATENT SPECIFICATION

(11) **EP 4 102 089 B1**
(45) Date of publication and mention of the grant of the patent: **24.01.2024**
(21) Application number: 22177284.1
(22) Date of filing: 03.06.2022
(51) Int. Cl.: F16C 33/78, F16C 33/74

(54) **BEARING INTEGRATED SEAL**
INTEGRIERTE LAGERDICHTUNG
PALIER D'ÉTANCHÉITÉ INTÉGRÉ

(30) Priority: 09.06.2021 JP 2021096501
(43) Date of publication of application: 14.12.2022
(73) Proprietor: Mitsubishi Cable Industries, Ltd., Chiyoda-ku Tokyo 100-8303 (JP)
(72) Inventor: FUJII, Nobukazu, Arida-shi, Wakayama, 649-0304 (JP)
(74) Representative: Germain Maureau

(56) References cited:
- WO-A1-2019/225210
- CN-A- 102 042 300
- DE-A1-102018 123 901
- US-A- 3 025 113

## Description

### TECHNICAL FIELD

The present invention relates to a bearing integrated seal used for a portion in which a bearing and a shaft seal of a vacuum pump, a compressor, an EGR valve, or the like, are proximately used.

### BACKGROUND ART

Conventionally, for example, as in Japanese Unexamined Patent Publication No. 2018-84292, a sintered bearing which is formed of a sintered material and includes a bearing sleeve having a shaft hole, an annular ring-shaped seal member provided such that one surface thereof is in contact with the bearing sleeve, and a washer member provided in contact with the other surface of the seal member in an opposite side to the surface thereof to fit the seal member to the bearing sleeve, and in which the washer member is fixed to the bearing sleeve has been known. In this type of sintered bearing, the seal member is integrally formed, and therefore, space saving, reduction in costs, or the like can be advantageously achieved.

CN102042300 shows a bearing system, which comprises a fixing sleeve and a bearing. An accommodating hole is formed in the fixing sleeve and the bearing is accommodated in the accommodating hole. The bearing system also comprises an elastic ring accommodated in the accommodating hole and sleeved on the periphery of the bearing; and the elastic ring is sandwiched between the fixing sleeve and the bearing and pressed against the outer surface of the bearing, so that the bearing is positioned in the accommodating hole of the fixing sleeve.

DE10201812390 shows a sliding bearing having a sealing arrangement for water pumps, configured to radially mount and seal a shaft in a housing between a wet side and a dry side. The sliding bearing and the sealing arrangement include a sliding bearing bushing made of a sintering material for radial mounting of the shaft, and a dry-side shaft seal arranged between the sliding bearing bushing and the dry side.

US3025113 shows a combined drive shaft bearing and seal having a tubular body. A steel sleeve is fitted within a hollow interior of the body and has a welded bronze inner portion.

### SUMMARY OF THE INVENTION

### TECHNICAL PROBLEM

However, in the sintered bearing described in Japanese Unexamined Patent Publication No. 2018-84292, in a case where a bearing portion is exposed to sealed fluid, a problem in corrosion resistance arises.

In a case where the seal member is caulked and joined directly to the bearing member, depending on a material of the bearing member, a problem arises in which integration is difficult due to insufficiency of rigidity of the bearing member itself.

In view of the foregoing, the present invention has been devised and it is therefore an object of the present invention to achieve a bearing integrated seal having excellent rigidity and corrosion resistance.

### SOLUTION TO THE PROBLEM

In order to achieve the above-described object, according to the present invention, a bearing member and a seal member are covered by an outer member and inner member.

Specifically, according to a first aspect of the invention, a bearing integrated seal includes a cylindrical bearing member, an outer member covering at least an outer periphery and one axial direction end of the bearing member, an annular ring-shaped seal member provided such that one surface thereof covers the other axial direction end of the bearing member in an inner surface side of the outer member, and an inner member covering the other surface of the seal member in an opposite side to the one surface to fit the seal member to the bearing member in the inner surface side of the outer member, and the inner member is fixed to the outer member to fix the bearing member and the seal member.

According to the above-described structure, the inner member is fixed to the outer member, and thus, the bearing member and the seal member can be fixed so as to be sandwiched between the inner member and the outer member in an axial direction. Therefore, even in a case where the bearing member is formed of a sintered member having relatively low rigidity, sufficient rigidity can be ensured. Moreover, the bearing member is sandwiched between the outer member and the seal member, and therefore, the bearing member is not exposed to sealed fluid and thus has excellent corrosion resistance. Furthermore, the seal member is integrally formed with the bearing member, and therefore, the number of parts is reduced, thereby facilitating mounting and saving a space.

According to the invention, the inner member has an L shape in a cross section, an axial direction flat surface of the inner member covers the other surface of the seal member, and an outer peripheral flat surface of the inner member is in contact with an inner peripheral flat surface of the outer member.

According to the above-described structure, the inner member is face contacted with the outer member and is reliably fixed to the outer member.

According to a further aspect of the invention, an end portion of the inner member in an opposite side to the axial direction flat surface is caulked and joined with an end portion of the outer member in an opposite side to the bearing member.

According to the above-described structure, caulking joining is provided in a state where the inner member is face contacted with the outer member, and therefore, the bearing member and the seal member are reliably fixed.

According to a further aspect of the invention, the inner member covers the other surface of the seal member with an annular ring-shaped gasket interposed therebetween.

According to the above-described structure, a leak (internal leak) flowing between the inner member and the seal member can be prevented.

According to a further aspect of the invention, the outer member covers the one axial direction end of the bearing member with an annular ring-shaped gasket interposed therebetween.

According to the above-described structure, a leak (internal leak) flowing between the outer member and the bearing member can be prevented.

According to a further aspect of the invention, the seal member covers the other axial direction end of the bearing member with an annular ring-shaped gasket interposed therebetween.

According to the above-described structure, a leak (internal leak) flowing between the seal member and the bearing member can be prevented.

### ADVANTAGES OF THE INVENTION

As has been described above, according to the present invention, a bearing integrated seal having excellent rigidity and corrosion resistance can be achieved.

### BRIEF DESCRIPTION OF THE DRAWINGS

FIG. 1 is a cross-sectional view illustrating a bearing integrated seal according to an embodiment of the present invention.
FIG. 2 is a perspective view of the bearing integrated seal with a portion broken.
FIG. 3 is a perspective view of a bearing integrated seal according to a modified example of the embodiment according to the present invention, corresponding to FIG. 2.

### DESCRIPTION OF EMBODIMENTS

An embodiment of the present invention will be described below with reference to the accompanying drawings.

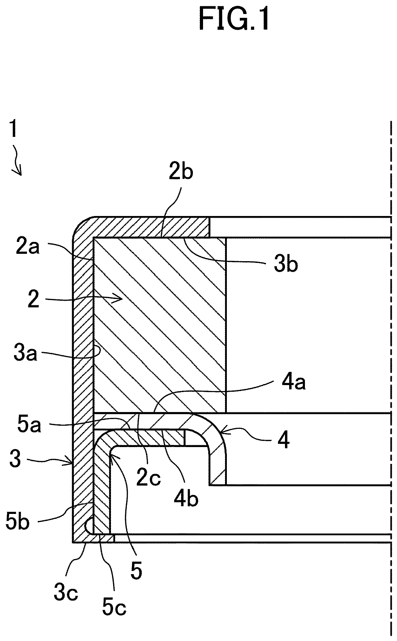

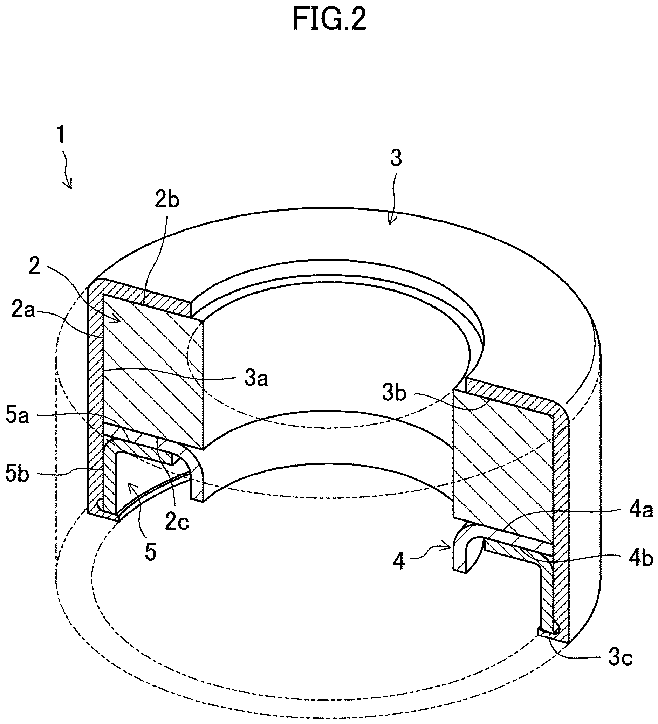

FIG. 1 and FIG. 2 illustrate a bearing integrated seal 1 of an embodiment of the present invention, and the bearing integrated seal 1 includes a cylindrical bearing member 2. The bearing member 2 may be formed of various materials. For example, the bearing member 2 may be formed of a sintered material, and may be a bush formed of a copper alloy, carbon, resin, or the like.

The bearing integrated seal 1 includes an outer member 3 covering at least an outer periphery 2a and one axial direction end 2b of the bearing member 2. A one axial direction end flat surface 3b of the outer member 3 is face contacted with the one axial direction end 2b of the bearing member 2. According to the invention, the outer member 3 has an annular ring shape formed such that a portion is bent and is a metal member formed of a stainless steel sheet, a cold-rolled steel sheet, or the like. In the outer member 3, a material, such as a stainless steel sheet or the like, having high corrosion resistance is suitable for a portion that requires corrosion resistance but, depending on a case, some other material than a metal material may be used, as long as the material is a rigid body that can be bent.

The bearing integrated seal 1 includes an annular ring-shaped seal member 4 provided such that one surface 4a thereof covers the other axial direction end 2c of the bearing member 2 in an inner surface side of the outer member 3. The seal member 4 is formed of a resin material, such as nylon, polyethylene, polytetrafluoroethylene (PTFE) that is chemically stable and has excellent heat resistance and chemical resistance, or the like, a rubber material, or the like.

The bearing integrated seal 1 further includes an inner member 5 covering the other surface 4b of the seal member 4 in an opposite side to the one surface 4a and fitting the seal member 4 to the bearing member 2 in the inner surface side of the outer member 3. The inner member 5 is fixed to the outer member 3 to fix the bearing member 2 and the seal member 4.

The inner member 5 has, according to the invention an annular ring shape and a L shape in a cross section formed by bending, an axial direction flat surface 5a of the inner member 5 covers the other surface 4b of the seal member 4, and an outer peripheral flat surface 5b of the inner member 5 is in contact with an inner peripheral flat surface 3a of the outer member 3. The inner member 5 is also preferably a metal member, such as a stainless steel sheet, a cold-rolled steel sheet, or the like, but, depending on a case, may be a rigid body that can be bent. For a portion that requires corrosion resistance, a material, such as a stainless steel sheet or the like, having high corrosion resistance is suitable.

An end portion 5c of the inner member 5 in an opposite side to the axial direction flat surface 5a is caulked and joined with an opposite-side end portion 3c of the outer member 3 in an opposite side to the bearing member 2. For example, the opposite-side end portion 3c can be easily caulked and joined when the opposite-side end portion 3c is formed to be thinner than the other portions. Caulking joining is provided by the opposite-side end portion 3c in a state where the outer peripheral flat surface 5b of the inner member 5 is face contacted with the inner peripheral flat surface 3a of the outer member 3, and therefore, the bearing member 2 and the seal member 4 are reliably fixed.

As has been described above, the inner member 5 is reliably fixed to the outer member 3, and thus, the bearing member 2 and the seal member 4 can be fixed so as to be sandwiched between the inner member 5 and the outer member 3 in an axial direction. Therefore, even in a case where the bearing member 2 is formed of a sintered member having relatively low rigidity, sufficient rigidity can be ensured.

Moreover, the bearing member 2 is sandwiched between the outer member 3 and the seal member 4, and therefore, the bearing member 2 is not exposed to sealed fluid and has excellent corrosion resistance.

Furthermore, the seal member 4 is integrally formed with the bearing member 2, and therefore, the number of parts is reduced, thereby facilitating mounting and saving a space.

Therefore, according to the bearing integrated seal 1 according to this embodiment, the bearing integrated seal 1 having excellent rigidity and corrosion resistance can be achieved.

### -Modified Example-

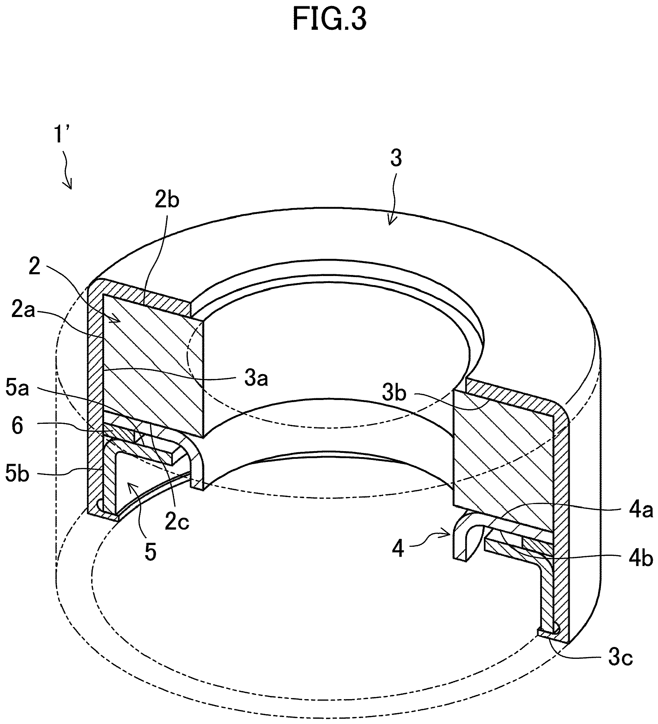

FIG. 3 illustrates a bearing integrated seal 1' according to a modified example of the above-described embodiment of the present invention and the modified example is different from the above-described embodiment in a point that a gasket 6 is provided. In this modified example, each component common in FIG. 1 and FIG. 2 is identified by the same reference character, and the detailed description thereof will be omitted.

The inner member 5 covers the other surface 4b of the seal member 4 with an annular ring-shaped gasket 6 interposed therebetween. That is, the gasket 6 is sandwiched between the axial direction flat surface 5a of the inner member 5 and the other axial direction end 2c of the bearing member 2. With the gasket 6 provided, a leak (internal leak) flowing between the axial direction flat surface 5a of the inner member 5 and the other surface 4b of the seal member 4 can be prevented.

A position of the gasket 6 is not limited to a position described in this modified example. Although not illustrated, for example, the outer member 3 may be configured to cover the one axial direction end 2b of the bearing member 2 with the annular ring-shaped gasket 6 interposed therebetween. In this case, with the gasket 6 provided, a leak (internal leak) flowing between the one axial direction end flat surface 3b of the outer member 3 and the one axial direction end 2b of the bearing member 2 can be prevented.

Moreover, the seal member 4 may be configured to cover the other axial direction end 2c of the bearing member 2 with the annular ring-shaped gasket 6 interposed therebetween. In this case, with the gasket 6 provided, a leak (internal leak) flowing between the one surface 4a of the seal member 4 and the other axial direction end 2c of the bearing member 2 can be prevented.

A plurality of gaskets 6 may be provided in the above-described plurality of positions.

Note that the above-described embodiment is merely a preferable example by nature and is not intended to be particularly limiting the present invention, application of the present invention, and the scope of use. The invention is defined in the appended claims.

### DESCRIPTION OF REFERENCE CHARACTERS

- 1, 1': Baring integrated seal
- 2: Bearing member
- 2a: Outer periphery
- 2b: One axial direction end
- 2c: Other axial direction end
- 3: Outer member
- 3a: Inner peripheral flat surface
- 3b: One axial direction end flat surface
- 3c: Opposite-side end portion
- 4: Seal member
- 4a: One surface
- 4b: Other surface
- 5: Inner member
- 5a: Axial direction flat surface
- 5b: Outer peripheral flat surface
- 5c: End portion
- 6: Gasket

## Claims

1. A bearing integrated seal (1, 1') comprising:
a cylindrical bearing member (2);
an annular ring-shaped outer member (3) covering at least an outer periphery (2a) and the one axial direction end (2b) of the bearing member (2);
an annular ring-shaped seal member (4) provided such that one surface thereof covers the other axial direction end (2c) of the bearing member (2) in an inner surface side of the outer member (3); and
an inner member (5) covering the other surface (4b) of the seal member (4) in an opposite side to the one surface (4a) to fit the seal member (4) to the bearing member (2) in the inner surface side of the outer member (3),
wherein
the inner member (5) is fixed to the outer member (3) to fix the bearing member (2) and the seal member (4) and the inner member (5) has an annular ring-shaped and an L shaped cross section, an axial direction flat surface (5a) of the inner member (5) covers the other surface (4b) of the seal member (4), and an outer peripheral flat surface (5b) of the inner member (5) is in contact with an inner peripheral flat surface of the outer member (3).

2. The bearing integrated seal (1, 1') of claim 1, wherein
an end portion (5c) of the inner member (5) in an opposite side to the axial direction flat surface is caulked and joined with an end portion (3c) of the outer member (3) in an opposite side to the bearing member (2).

3. The bearing integrated seal (1, 1') of claim 1 or 2, wherein
the inner member (5) covers the other surface of the seal member (4) with an annular ring-shaped gasket (6) interposed therebetween.

4. The bearing integrated seal (1, 1') of any one of claims 1 to 3, wherein
the outer member (3) covers one axial direction end (2b) of the bearing member (2) with an annular ring-shaped gasket (6) interposed therebetween.

5. The bearing integrated seal (1, 1') of any one of claims 1 to 4, wherein
the seal member (4) covers the other axial direction end (2c) of the bearing member (2) with an annular ring-shaped gasket (6) interposed therebetween.

## Patentansprüche

1. Integrierte Lagerdichtung (1, 1'), umfassend:
ein zylindrisches Lagerelement (2);
ein kreisringförmiges Außenelement (3), das mindestens einen Außenumfang (2a) und das eine axiale Richtungsende (2b) des Lagerelements (2) abdeckt;
ein kreisringförmiges Dichtungselement (4), das bereitgestellt ist, sodass eine Oberfläche davon das andere axiale Richtungsende (2c) des Lagerelements (2) auf Seiten einer Innenoberfläche des Außenelements (3) abdeckt; und
ein Innenelement (5), das die andere Oberfläche (4b) des Dichtungselements (4) auf einer gegenüberliegenden Seite zu der einen Oberfläche (4a) abdeckt, um das Dichtungselement (4) in das Lagerelement (2) auf Seiten der Innenoberfläche des Außenelements (3) einzupassen,
wobei
das Innenelement (5) an dem Außenelement (3) befestigt ist, um das Lagerelement (2) und das Dichtungselement (4) zu befestigen, und das Innenelement (5) einen kreisringförmigen und einen L-förmigen Querschnitt aufweist, eine flache Oberfläche der axialen Richtung (5a) des Innenelements (5) die andere Oberfläche (4b) des Dichtungselements (4) abdeckt, und eine flache Oberfläche eines Außenumfangs (5b) des Innenelements (5) in Kontakt mit einer flachen Oberfläche des Innenumfangs des Außenelements (3) ist.

2. Integrierte Lagerdichtung (1, 1') nach Anspruch 1, wobei
ein Endabschnitt (5c) des Innenelements (5) auf einer gegenüberliegenden Seite zur flachen Oberfläche der axialen Richtung abgedichtet und mit einem Endabschnitt (3c) des Außenelements (3) auf einer gegenüberliegenden Seite zum Lagerelement (2) verbunden ist.

3. Integrierte Lagerdichtung (1, 1') nach Anspruch 1 oder 2, wobei
das Innenelement (5) die Außenoberfläche des Dichtungselements (4) mit einer dazwischen eingesetzten kreisringförmigen Dichtung (6) abdeckt.

4. Integrierte Lagerdichtung (1, 1') nach einem der Ansprüche 1 bis 3, wobei
das Außenelement (3) ein axiales Richtungsende (2b) des Lagerelements (2) mit einer dazwischen eingesetzten kreisringförmigen Dichtung (6) abdeckt.

5. Integrierte Lagerdichtung (1, 1') nach einem der Ansprüche 1 bis 4, wobei
das Dichtungselement (4) das andere axiale Richtungsende (2c) des Lagerelements (2) mit einer dazwischen eingesetzten kreisringförmigen Dichtung (6) abdeckt.

## Revendications

1. Joint de roulement intégré (1, 1'), comprenant :
un élément de roulement cylindrique (2) ;
un élément extérieur (3) en forme de bague annulaire recouvrant au moins une périphérie extérieure (2a) et une extrémité de direction axiale (2b) de l'élément de roulement (2) ;
un élément d'étanchéité (4) en forme de bague annulaire prévu de sorte qu'une surface de celui-ci recouvre l'autre extrémité de direction axiale (2c) de l'élément de roulement (2) dans un côté de surface intérieure de l'élément extérieur (3) ; et
un élément intérieur (5) recouvrant l'autre surface (4b) de l'élément d'étanchéité (4) dans un côté opposé à la surface (4a) pour ajuster l'élément d'étanchéité (4) sur l'élément de roulement (2) dans le côté de surface intérieure de l'élément extérieur (3),
dans lequel
l'élément intérieur (5) est fixé à l'élément extérieur (3) pour fixer l'élément de roulement (2) et l'élément d'étanchéité (4), et l'élément intérieur (5) présente une section transversale en forme de bague et en forme L annulaire, une surface plane de direction axiale (5a) de l'élément intérieur (5) recouvre l'autre surface (4b) de l'élément d'étanchéité (4), et une surface plane périphérique extérieure (5b) de l'élément intérieur (5) est en contact avec une surface plane périphérique intérieure de l'élément extérieur (3).

2. Joint de roulement intégré (1, 1') de la revendication 1, dans lequel
une partie d'extrémité (5c) de l'élément intérieur (5) dans un côté opposé à la surface plane de direction axiale est calfeutrée et jointe à une partie d'extrémité (3c) de l'élément extérieur (3) dans un côté opposé à l'élément de roulement (2).

3. Joint de roulement intégré (1, 1') de la revendication 1 ou 2, dans lequel l'élément intérieur (5) recouvre l'autre surface de l'élément d'étanchéité (4) avec une garniture en forme de bague annulaire (6) interposée entre eux.

4. Joint de roulement intégré (1, 1') de l'une quelconque des revendications 1 à 3, dans lequel
l'élément extérieur (3) recouvre une extrémité de direction axiale (2b) de l'élément de roulement (2) avec une garniture en forme de bague annulaire (6) interposée entre eux.

5. Joint de roulement intégré (1, 1') de l'une quelconque des revendications 1 à 4, dans lequel
l'élément d'étanchéité (4) recouvre l'autre extrémité de direction axiale (2c) de l'élément de roulement (2) avec une garniture en forme de bague annulaire (6) interposée entre eux.
